# EUROPÄISCHE PATENTSCHRIFT

(11) **EP 4 327 053 B1**
(45) Veröffentlichungstag und Bekanntmachung des Hinweises auf die Patenterteilung: **05.08.2026**
(21) Anmeldenummer: 22717374.7
(22) Anmeldetag: 21.03.2022
(51) Int. Cl.: G01D 11/24, G01D 21/00

(54) **GEHÄUSE EINES FELDGERÄTS DER MESS- UND AUTOMATISIERUNGSTECHNIK UND EIN SOLCHES FELDGERÄT**
HOUSING OF A FIELD DEVICE IN MEASUREMENT AND AUTOMATION TECHNOLOGY, AND FIELD DEVICE OF THIS TYPE
BOÎTIER D'UN APPAREIL DE TERRAIN EN TECHNOLOGIE DE MESURE ET D'AUTOMATISATION, ET APPAREIL DE TERRAIN DU MÊME TYPE

(30) Priorität: 22.04.2021 DE 102021110343
(43) Veröffentlichungstag der Anmeldung: 28.02.2024
(73) Patentinhaber: Endress+Hauser Flowtec AG, 4153 Reinach (CH)
(72) Erfinder: MOSER, Thiérry, 68510 Sierentz (FR)
(74) Vertreter: Endress + Hauser Group Services (Deutschland) AG+Co. KG
(86) Internationale Anmeldenummer: PCT/EP2022/057324
(87) Internationale Veröffentlichungsnummer: WO 2022/223211

(56) Entgegenhaltungen:
- DE-A1- 102005 059 662
- DE-A1- 102006 056 649
- DE-A1- 102012 111 662
- DE-A1- 102018 132 061
- DE-B3- 102013 011 633

## Beschreibung

Die Erfindung betrifft ein Gehäuse eines Feldgeräts der Mess- und Automatisierungstechnik mit einem Deckel zum Verschließen des Gehäuses. Aus dem Stand der Technik, siehe z.B. die DE102018132061A1, sind Umsetzungen bekannt, bei welchen eine transparente Scheibe mittels eines Deckelelements gegen das Gehäuse gedrückt wird. DE102006056649A1 zeigt ein weiteres Gehäuse mit Sichtscheibe.

Üblicherweise befindet sich hinter der Scheibe eine Bedienelektronik. Nachteilhaft daran ist, dass der Deckel senkrecht zur Scheibe Platz beansprucht, so dass eine Senke ausgebildet wird. Auf diese Weise kann sich beispielsweise Wasser auf der Scheibe sammeln. Außerdem wird dadurch auch eine Bedienung des Feldgeräts mit einem Smartphone per Near-Field-Communication erschwert.

Als Aufgabe der Erfindung kann es daher gesehen werden, ein Gehäuse eines Feldgeräts der Mess- und Automatisierungstechnik vorzuschlagen, bei welchem oben genannte Nachteile vermieden werden.

Die Aufgabe wird gelöst durch ein Gehäuse gemäß dem unabhängigen Anspruch 1 sowie durch ein Feldgerät gemäß dem unabhängigen Anspruch 8.

Ein erfindungsgemäßes Gehäuse eines Feldgeräts der Mess- und Automatisierungstechnik umfasst:
einen Gehäusekörper mit einer ein Innenvolumen einschließenden Gehäusewandung, einen Deckel, welcher in eine Öffnung der Gehäusewandung eingesetzt ist und diese dicht verschließt,
wobei der Deckel einen Ringkörper und eine Scheibe aufweist, wobei der Ringkörper in die Öffnung eingesetzt und am Gehäusekörper befestigt ist, und wobei die Scheibe in den Ringkörper eingesetzt ist und die Öffnung dicht schließt,
wobei die Scheibe zwei gegenüberliegende Seitenflächen und einen Rand aufweist, wobei der Rand eine die Scheibe umlaufende Scheibenrille aufweist, wobei der Ringkörper auf einer Innenseite eine Körperrille aufweist, wobei die Körperrille die Scheibenrille umgreift, wobei die Körperrille und die Scheibenrille einen ersten Korridor ausbilden,
wobei der erste Korridor mit einer Vergussmasse gefüllt ist und/oder wobei in den Korridor ein Seil oder eine Mehrzahl von Kugeln eingesetzt sind.

Die Kugeln bzw. das Seil kann beispielsweise aus einem Metall wie beispielsweise Stahl gefertigt sein. Das Seil kann ein Drahtseil sein. Die Vergussmasse kann beispielsweise Silikon insbesondere mit einem Härtegrad zwischen 25 Shore A und 75 Shore A sein.

Die Vorrichtung kann somit kompakt ausgestaltet werden. Mittels des Seils bzw. der Kugeln kann die Scheibe fest im Ringkörper verankert werden so dass auf diese Weise eine Sicherheit nach EX-d gewährleistet werden kann.

In einer Ausgestaltung weist der erste Korridor einen ersten Durchmesser auf, wobei das Seil bzw. die Kugeln jeweils einen zweiten Durchmesser aufweisen, wobei der zweite Durchmesser zumindest 60% und insbesondere mindestens 70% und bevorzugt mindestens 80% des ersten Durchmessers ist.

In einer Ausgestaltung weist der Deckel einen auf einer dem Innenvolumen zugewandten Seite des Deckels einen umlaufenden, inwärts ragenden Vorsprung bzw. Schulter auf, welcher mit der Scheibe einen zweiten Korridor ausbildet, wobei im zweiten Korridor ein Dichtring angeordnet ist, welcher dazu eingerichtet ist, eine elastische Lagerung der Scheibe bereitzustellen.

In einer Ausgestaltung ist der zweite Korridor mit einer Vergussmasse gefüllt.

Dadurch kann eine elastische Lagerung der Scheibe verbessert werden.

In einer Ausgestaltung schließt eine außenliegende Seitenfläche der Scheibe bündig mit dem Ringkörper ab.

Auf diese Weise kann eine Ansammlung einer Flüssigkeit im Bereich der Scheibe vermieden werden. Außerdem wird so eine Bedienung eines Feldgeräts mit erfindungsgemäßem Gehäuse per Near-Field-Communication (NFC) erleichtert.

In einer Ausgestaltung weist der Ringkörper und/oder die Scheibe jeweils zumindest einen Einlass zum Einführen der Kugeln bzw. des Seils auf.

Somit ist der Zusammenbau des Gehäuses einfacher zu bewerkstelligen.

In einer Ausgestaltung ist die Scheibe transparent.

In einer Ausgestaltung weisen der Ringkörper, sowie die Scheibe sowie die Kugeln bzw. das Seil jeweils zumindest eines der folgenden Materialien auf:
Aluminium, rostfreier Stahl, Glas, Kunststoff.

In einer Ausgestaltung ist das Gehäuse EX-d-sicher ausgebildet,
wobei die Scheibe eine Mindestdicke von 10 Millimetern aufweist, wobei die Scheibe aus Aluminium, einem rostfreien Stahl, oder einem Glas gefertigt ist,

Ein erfindungsgemäßes Feldgerät der Mess- und Automatisierungstechnik umfasst:
Ein Gehäuse nach einem der vorigen Ansprüche,
einen Messaufnehmer;
eine elektronische Mess-/Betriebsschaltung zum Betreiben des Messaufnehmers und zum Bereitstellen von Messwerten einer Messgröße, wobei die elektronische Mess-/Betriebsschaltung im Gehäuse angeordnet ist.

Im Folgenden wird die Erfindung anhand von Ausführungsbeispielen beschrieben.

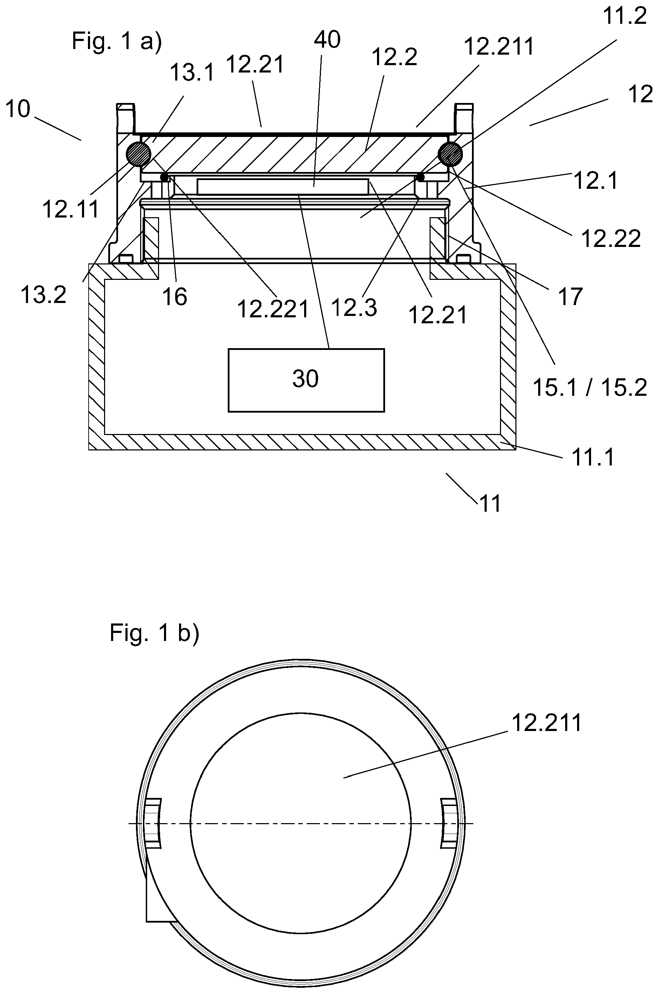

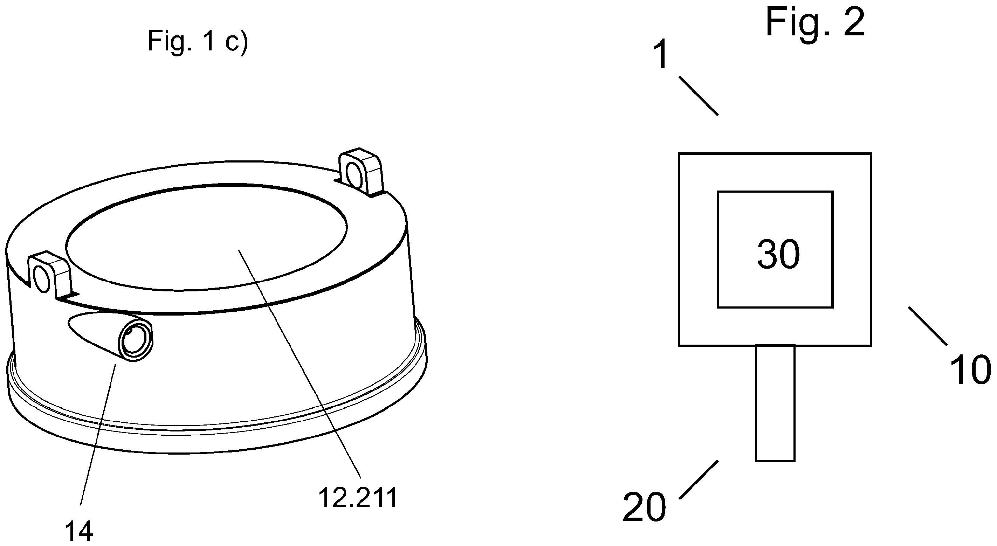

Figs. 1 a) skizziert den Aufbau eines erfindungsgemäßen Gehäuses eines Feldgeräts der Mess- und Automatisierungstechnik mit einem erfindungsgemäßen Deckel.
Fig. 1 b) zeigt eine Aufsicht auf den Deckel.
Fig. 1 c) zeigt eine Schrägaufsicht auf den Deckel.
Fig. 2 skizziert ein beispielhaftes Feldgerät der Mess- und Automatisierungstechnik.

Fig. 1 a) zeigt einen Schnitt durch ein erfindungsgemäßes beispielhaftes Gehäuse 10 eines Feldgeräts der Mess- und Automatisierungstechnik mit einem Deckel, Fig. 1 b) zeigt eine Aufsicht auf den Deckel und Fig. 1 c) eine Schrägaufsicht. Der Deckel weist einen Ringkörper 12.1 auf, in welchen eine Scheibe 12.2 eingesetzt ist. Die Scheibe weist gegenüberliegende Seitenflächen 12.21 und einen Rand 12.22 auf, welcher die Seitenflächen voneinander trennt. Das Gehäuse 10 weist einen Gehäusekörper 11 mit einer ein Innenvolumen umfassende Gehäusewandung 11.1 auf.

Der Rand weist eine Scheibenrille 12.221 auf, welche auf Höhe einer Körperrille 12.11 angeordnet ist, so dass ein erster Korridor 13.1 ausgebildet wird. Der erste Korridor kann dabei mit einer Vergussmasse gefüllt sein und/oder kann wie hier gezeigt ein Seil 15.2 oder eine Mehrzahl Kugeln 15.1 aufgenommen haben. Der erste Korridor weist einen ersten Durchmesser auf, wobei das Seil bzw. die Kugeln jeweils einen zweiten Durchmesser aufweisen, wobei der zweite Durchmesser beispielsweise zumindest 70% und insbesondere mindestens 80% und bevorzugt mindestens 90% des ersten Durchmessers ist. Auf diese Weise ist die Scheibe im Ringkörper gehalten. Je geringer der Unterschied zwischen erstem Durchmesser und zweitem Durchmesser, desto fester und sicherer der Sitz der Scheibe im Ringkörper. Auf diese Weise kann die Vorrichtung EX-d-sicher ausgebildet werden.

Der Deckel kann wie hier gezeigt einen inwärts in Richtung einer Längsachse des Deckels ragenden Vorsprung bzw. Schulter 12.3 aufweisen, welcher mit der Scheibe einen zweiten Korridor 13.2 ausbildet, wobei im zweiten Korridor ein Dichtring 16 angeordnet ist, welcher dazu eingerichtet ist, eine elastische Lagerung der Scheibe bereitzustellen.

Beispielsweise wenn im ersten Korridor eine Mehrzahl Kugeln oder ein Seil angeordnet ist, um EX-d-Sicherheit zu gewährleiten, kann das Füllen des zweiten Korridors mit einem Verguss vorteilhaft sein, da in Anwesenheit der Kugeln bzw. des Seils der erste Korridor nur schwer zusätzlich mit Vergussmasse gefüllt werden kann.

In einer Ausgestaltung ist die Scheibe transparent.

Das Innenvolumen ist dazu eingerichtet, eine elektronische Mess-/Betriebsschaltung 30 des Feldgeräts, siehe auch Fig. 2, aufzunehmen, welche dazu eingerichtet ist, einen Messaufnehmer des Feldgeräts zu betreiben und Messwerte einer Messgröße bereitzustellen. Des Weiteren kann eine Anzeigevorrichtung 40 vorgesehen sein, um einem Benutzer des Feldgeräts Informationen zu übermitteln.

Der Deckel kann dabei wie hier angedeutet über eine Gewindeverbindung 17 am Gehäuse befestigt sein, wobei wie hier der Deckel beispielsweise ein Innengewinde umfasst. Alternativ sind auch Konstruktionen denkbar, bei welchen der Deckel ein Außengewinde umfasst.

Fig. 2 skizziert den Aufbau eines beispielhaften Feldgeräts 1, welches ein Gehäuse 10, einen mit dem Gehäuse verbundenen Messaufnehmer 20 und eine elektronische Mess-/Betriebsschaltung 30 aufweist.

### Bezugszeichenliste

- 1: Feldgerät
- 10: Gehäuse
- 11: Gehäusekörper
- 11.1: Gehäusewandung
- 11.2: Öffnung der Gehäusewandung
- 12: Deckel
- 12.1: Ringkörper
- 12.11: Körperrille
- 12.2: Scheibe
- 12.21: Seitenfläche
- 12.211: außenliegende Seitenfläche
- 12.22: Rand
- 12.221: Scheibenrille
- 12.3: Schulter
- 13.1: erster Korridor
- 13.2: zweiter Korridor
- 14: Einlass
- 15.1: Kugel
- 15.2: Seil
- 16: Dichtring
- 17: Gewindeverbindung
- 20: Messaufnehmer
- 30: elektronische Mess-/Betriebsschaltung
- 40: Anzeigeeinheit

## Patentansprüche

1. Gehäuse (10) eines Feldgeräts (1) der Mess- und Automatisierungstechnik umfassend:
einen Gehäusekörper (11) mit einer ein Innenvolumen einschließenden Gehäusewandung (11.1),
einen Deckel (12), welcher in eine Öffnung (11.2) der Gehäusewandung eingesetzt ist und diese dicht verschließt,
wobei der Deckel einen Ringkörper (12.1) und eine Scheibe (12.2) aufweist, wobei der Ringkörper in die Öffnung eingesetzt und am Gehäusekörper befestigt ist, und wobei die Scheibe in den Ringkörper eingesetzt ist und die Öffnung dicht schließt,
wobei die Scheibe zwei gegenüberliegende Seitenflächen (12.21) und einen Rand (12.22) aufweist,
**dadurch gekennzeichnet, dass**
der Rand eine die Scheibe umlaufende Scheibenrille (12.221) aufweist, wobei der Ringkörper auf einer Innenseite eine Körperrille (12.11) aufweist, wobei die Körperrille die Scheibenrille umgreift, wobei die Körperrille und die Scheibenrille einen ersten Korridor (13.1) ausbilden,
wobei der erste Korridor mit einer Vergussmasse gefüllt ist und/oder wobei in den Korridor ein Seil oder eine Mehrzahl von Kugeln eingesetzt sind.

2. Gehäuse nach Anspruch 1,
wobei der erste Korridor einen ersten Durchmesser aufweist, wobei das Seil bzw. die Kugeln jeweils einen zweiten Durchmesser aufweisen,
wobei der zweite Durchmesser zumindest 70% und insbesondere mindestens 80% und bevorzugt mindestens 90% des ersten Durchmessers ist.

3. Gehäuse nach Anspruch 1 oder 2,
wobei der Deckel einen auf einer dem Innenvolumen zugewandten Seite des Deckels einen inwärts ragenden Vorsprung bzw. Schulter (12.3) aufweist, welcher mit der Scheibe einen zweiten Korridor (13.2) ausbildet,
wobei im zweiten Korridor ein Dichtring (16) angeordnet ist, welcher dazu eingerichtet ist, eine elastische Lagerung der Scheibe bereitzustellen.

4. Gehäuse nach Anspruch 3,
wobei der zweite Korridor (13.2) mit einer Vergussmasse gefüllt ist.

5. Gehäuse nach einem der vorigen Ansprüche,
wobei eine außenliegende Seitenfläche (12.211) der Scheibe bündig mit dem Ringkörper abschließt.

6. Gehäuse nach einem der vorigen Ansprüche,
wobei der Ringkörper (12.1) und/oder die Scheibe (12.2) jeweils zumindest einen Einlass (14) zum Einführen der Kugeln (15.1) bzw. des Seils (15.2) aufweist.

7. Gehäuse nach einem der vorigen Ansprüche,
wobei die Scheibe (12.2) transparent ist.

8. Gehäuse nach einem der Ansprüche,
wobei der Ringkörper (12.1), sowie die Scheibe (12.2) sowie die Kugeln bzw. das Seil jeweils zumindest eines der folgenden Materialien aufweisen:
Aluminium, rostfreier Stahl, Glas, Kunststoff.

9. Gehäuse nach einem der vorigen Ansprüche,
wobei das Gehäuse (10) EX-d-sicher ausgebildet ist,
wobei die Scheibe (12.2) insbesondere eine Mindestdicke von 10 Millimetern aufweist, wobei die Scheibe aus Aluminium, einem rostfreien Stahl, oder einem Glas gefertigt ist,

10. Feldgerät (1) der Mess- und Automatisierungstechnik umfassend:
Ein Gehäuse (10) nach einem der vorigen Ansprüche,
einen Messaufnehmer (20);
eine elektronische Mess-/Betriebsschaltung (30) zum Betreiben des Messaufnehmers und zum Bereitstellen von Messwerten einer Messgröße, wobei die elektronische Mess-/Betriebsschaltung im Gehäuse angeordnet ist.

## Claims

1. A housing (10) of a field device (1) of measurement and automation technology, comprising:
• a housing body (11) having a housing wall (11.1) enclosing an internal volume,
• a cover (12) which is inserted into an opening (11.2) of the housing wall and tightly seals the same,
wherein the cover comprises a ring body (12.1) and a disc (12.2), wherein the ring body is inserted into the opening and is fixed to the housing body, and wherein the disc is inserted into the ring body and tightly closes the opening,
wherein the disc comprises two opposite side surfaces (12.21) and an edge (12.22),
**characterized in that**
the edge comprises a disc groove (12.221) running around the disc, wherein the ring body comprises, on an inner side, a body groove (12.11), wherein the body groove embraces the disc groove, wherein the body groove and the disc groove form a first corridor (13.1),
wherein the first corridor is filled with a potting compound and/or wherein a rope or a plurality of balls is inserted into the corridor.

2. The housing according to claim 1,
wherein the first corridor has a first diameter, wherein the rope and/or the balls each have a second diameter,
wherein the second diameter is at least 70%, in particular at least 80%, and preferably at least 90% of the first diameter.

3. The housing according to claim 1 or 2,
wherein the cover comprises, on a side of the cover facing the internal volume, an inwardly protruding projection or shoulder (12.3), which together with the disc forms a second corridor (13.2),
wherein a sealing ring (16) is arranged in the second corridor, said sealing ring being configured to provide an elastic mounting of the disc.

4. The housing according to claim 3,
wherein the second corridor (13.2) is filled with a potting compound.

5. The housing according to any one of the preceding claims,
wherein an outer side surface (12.211) of the disc is flush with the ring body.

6. The housing according to any one of the preceding claims,
wherein the ring body (12.1) and/or the disc (12.2) each comprise at least one inlet (14) for introducing the balls (15.1) and/or the rope (15.2).

7. The housing according to any one of the preceding claims,
wherein the disc (12.2) is transparent.

8. The housing according to any one of the preceding claims,
wherein the ring body (12.1), the disc (12.2), and the balls or the rope each comprise at least one of the following materials:
aluminum, stainless steel, glass, plastic.

9. The housing according to any one of the preceding claims,
wherein the housing (10) is designed as explosion-proof (Ex-d),
wherein the disc (12.2) has in particular a minimum thickness of 10 millimeters,
wherein the disc is made of aluminum, stainless steel, or glass.

10. A field device (1) of measurement and automation technology, comprising:
• a housing (10) according to any one of the preceding claims,
• a sensor (20),
• an electronic measuring/operating circuit (30) for operating the sensor and for providing measured values of a measured variable,
wherein the electronic measuring/operating circuit is arranged in the housing.

## Revendications

1. Boîtier (10) d'un appareil de terrain (1) de technique de mesure et d'automatisation, comprenant :
• un corps de boîtier (11) présentant une paroi de boîtier (11.1) délimitant un volume intérieur,
• un couvercle (12) qui est inséré dans une ouverture (11.2) de la paroi du boîtier et qui ferme celle-ci de manière étanche,
dans lequel le couvercle comprend un corps annulaire (12.1) et un disque (12.2), le corps annulaire étant inséré dans l'ouverture et fixé au corps de boîtier, et le disque étant inséré dans le corps annulaire et fermant l'ouverture de manière étanche,
dans lequel le disque présente deux faces latérales opposées (12.21) et un bord (12.22),
**caractérisé en ce que**
le bord présente une gorge de disque (12.221) s'étendant tout autour du disque, le corps annulaire présentant, sur une face interne, une gorge de corps (12.11), la gorge de corps ceinturant la gorge de disque, la gorge de corps et la gorge de disque formant un premier corridor (13.1),
le premier corridor étant rempli d'un matériau d'enrobage et/ou un câble ou une pluralité de billes étant introduits dans le corridor.

2. Boîtier selon la revendication 1,
dans lequel le premier corridor présente un premier diamètre, le câble et/ou les billes présentant chacun un deuxième diamètre,
le deuxième diamètre représentant au moins 70 %, en particulier au moins 80 %, et de préférence au moins 90 % du premier diamètre.

3. Boîtier selon la revendication 1 ou 2,
dans lequel le couvercle présente, sur un côté orienté vers le volume intérieur, une saillie ou épaulement (12.3) faisant saillie vers l'intérieur, lequel, conjointement avec le disque, forme un deuxième corridor (13.2),
un joint d'étanchéité (16) étant disposé dans le deuxième corridor, ledit joint étant configuré pour assurer un montage élastique du disque.

4. Boîtier selon la revendication 3,
dans lequel le deuxième corridor (13.2) est rempli d'un matériau d'enrobage.

5. Boîtier selon l'une quelconque des revendications précédentes,
dans lequel une face latérale externe (12.211) du disque affleure le corps annulaire.

6. Boîtier selon l'une quelconque des revendications précédentes,
dans lequel le corps annulaire (12.1) et/ou le disque (12.2) présentent chacun au moins une entrée (14) pour l'introduction des billes (15.1) et/ou du câble (15.2).

7. Boîtier selon l'une quelconque des revendications précédentes,
dans lequel le disque (12.2) est transparent.

8. Boîtier selon l'une quelconque des revendications précédentes,
dans lequel le corps annulaire (12.1), le disque (12.2) ainsi que les billes ou le câble comprennent chacun au moins l'un des matériaux suivants :
aluminium, acier inoxydable, verre, plastique.

9. Boîtier selon l'une quelconque des revendications précédentes,
dans lequel le boîtier (10) est conçu de manière antidéflagrante (Ex-d),
dans lequel le disque (12.2) présente en particulier une épaisseur minimale de 10 millimètres,
dans lequel le disque est réalisé en aluminium, en acier inoxydable ou en verre.

10. Appareil de terrain (1) de technique de mesure et d'automatisation, comprenant :
• un boîtier (10) selon l'une quelconque des revendications précédentes,
• un capteur (20),
• un circuit électronique de mesure et/ou de fonctionnement (30) destiné à faire fonctionner le capteur et à fournir des valeurs de mesure d'une grandeur mesurée,
ledit circuit électronique étant disposé dans le boîtier.
